# EUROPEAN PATENT APPLICATION

(11) **EP 0 672 918 A2**
(43) Date of publication of application: **20.09.1995**
(21) Application number: 95103579.9
(22) Date of filing: 13.03.1995
(51) Int. Cl.: G01S 5/16, G01S 1/70, H04B 10/10, G01S 5/00

(54) **Optoelectronic control system**

(30) Priority: 14.03.1994 IT TN940003 U
(71) Applicant: MUSEO CIVICO - COMUNE DI ROVERETO, I-38068 Rovereto, Trento (IT)
(72) Inventor: De Rosa, Marco, I-38050 Oltrecastello ( Trento ) (IT); Fontana, Giorgio, I-38040 Martignano ( Trento ) (IT); Voltolini, Marco, I-38050 Villazzano( Trento ) (IT); Gambino, Massimo, I-38014 Gardolo ( Trento ) (IT)
(74) Representative: Modiano, Guido, Dr.-Ing.

(57) **Abstract**

A control system comprising a plurality of position code emitters or beacons (2,3) arranged to mark a specific zone either inside a building or outside, at least one portable processor (1), and detecting means controlled by the or each portable processor (1) and arrangged to detect and decode signals generated by the or each beacon.

## Description

The present invention relates to an optoelectronic system, particularly useful as a multimedia guide for museums or the like.

As is known, conventional information systems are in general in one or more of the following states: programming of the control system, data gathering and data distribution. The steps of system programming and data gathering are known per se and a detailed description of the same is not deemed necessary.

During a data distribution step a user of the system is in a position of interrogating the system to obtain all necessary information. Thus, for example, the user applies a badge or a password to get access to the data and thus access to the requested data is allowed.

An object of the present invention is to provide an optoelectronic system in which data access is also controlled by the environment data in which the user is located.

Another object of the present invention is to provide an optoelectronic system that can be produced at low costs, is very reliable and provides high space accuracy, so that it can be used inside buildings where major navigation systems, such as LORAN (long range navigation) system or GPS (global positioning satellite) system cannot be adopted.

These and other objects are achieved by an optoelectro nic control system according to the invention, which comprises a plurality of optoelectronic position code emitters or beacons arranged to mark a specific zone either inside or outside a building, at least one portable processor, and optoelectronic detecting means controlled by the or each portable processor and arranged to detect and decode signals generated by the or each beacon.

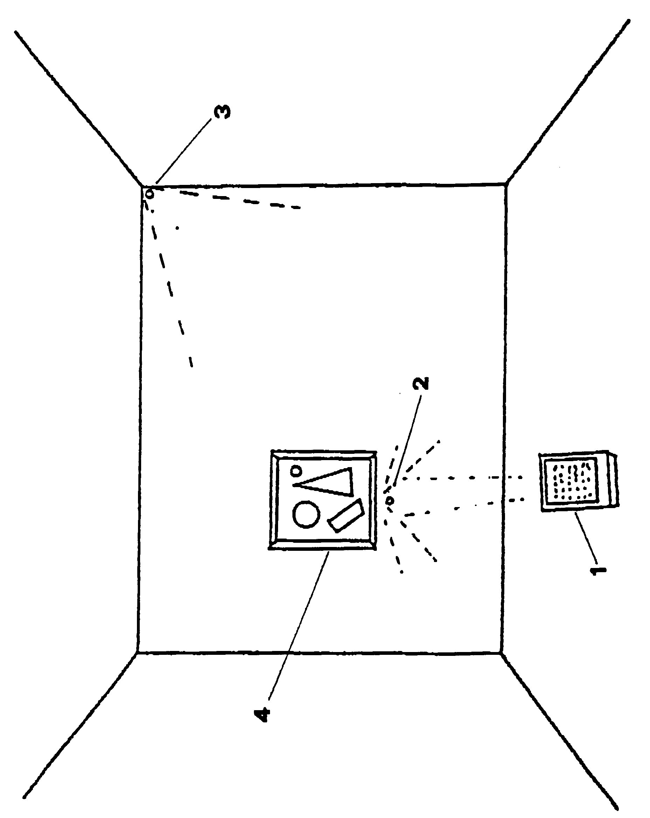

An optoelectronic system according to the invention is illustrated in the single Figure of the accompanying drawings, which diagrammatically illustrates a portable processor 1 and a museum room equipped with a beacons 2 and 3.

The processor 1 includes a program and the majority of the information data and, besides allowing a user to dialog with it, is arranged to receive information from the environment.

A visitor or user is equipped with a portable processor 1. The user can obtain all information on a given work of art, e.g. a picture 4 on a wall, by simply entering the specific room in which the picture is located under the influence of the beacons 2 and 3, as will be further explained below.

The programm loaded in the processor 1 is a multimedia software which allows the user to obtain from it, such as by using a technique of the touch-screen type, sound information, instructions about the direction to follow to reach further works of art related to a determined piece of art, etc.

The presence of a large number of beacons 2 and 3 makes it possible for the multimedia software to put the visitor or user in a condition of knowing his actual position inside a building or structure. Accordingly, the control system according to the present invention is also a navigation system.

The software constitutes a modifiable part, that can be personified, of the control system and comprises a hypertext, i.e. an information text, graphic, photographic, cinematographic and sound system, to which access can be obtained through controls of tactile (e.g. press-buttons), sound (e.g. sound controls) or environment nature.

The optoelectonic position code generators or beacons 2 and 4 mark with high accuracy a well delimited area either outside or inside a building. Each beacon needs to be supplied with electric power which could comprise either a mains system or batteries, generators, solar cells and the like. The capacity of delimiting a "radiated" zone with high accuracy is a direct consequence of the type of signal emitted by each beacon, i.e. an optical signal carrying a zone code.

Such an optical signal is generated by solid-state emitters connected to an electronic circuit suitable for generating electric control signals. The amplitude of the zone radiated by an emitter is a function of the characteristic features of the emitter and the optical devices, e.g. lenses and reflectors, used to shape the visible or infrared light emitted by the emitter.

The electric control signals are numeric codes continuously repeated. Each beacon generates a personified code and is thus distinguishable from all the others. Thus, all the beacons differ in code, at least within the same structure or application. Moreover, the beocons differ from each other by belonging to some classes of influence depending upon the emission amplitude and power.

In the embodiment shown in relation to museums each beacon generates in an asynchronous way and at low duty-cycle packets of data identifying the areas of interest and the single works of art.

The beacons completely radiate or "illuminate" the areas of interest, whereas the becons for the works of art are each located nearby the respective work or works of art.

The provision and energization of specific emergency beacons makes it possible to generate additional information, e.g. for controlling an orderly evacuation of the building in case of danger, by sending information aimed at a limited group of visitors, thereby avoiding use of general alarm systems, at least in most circumstances of minor emergencies.

Since the beacons consume relaitvely low energy amounts, they can be fed by small dimensions energy sources, e.g. photovoltaic cells. This feature is particularly important in zones where no electri mains are available.

Each visitor or group of visitors is equipped with a portable processor 1, which is arrenged to give all information concerning a specific work of art upon simply entering in the range of influence of a specific beacons assigned to that work of art. The multimedia software loaded in each processor 1 will allows further interrogations to be obtained by means of any suitable known technique, e.g. a touch-screen technique or the like, to obtain sound information about the direction to be followed, for instance, to see other works of art related to that presently being viewed, etc.

The provision of a suitable number of location beacons makes it possible for the processor user to know his position at a given time inside the building or other structure. Accordingly, the control system of the presen invention is also a navigation system.

Further applications of the control system in accordance with the present invention can be found in supermarkets, in natural parks and the like, where information are required both for navigation and illustration purposes.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A control system comprising a plurality of position code emitters or beacons arranged to mark a specific zone either inside a building or outside, at least one portable processor, and detecting means controlled by the or each portable processor and arrangged to detect and decode signals generated by the or each beacon.

2. A control system as claimed in claim 1, characterized in that each of the said position code emitters or beacons and the said detecting means are of optoelectronic type.

3. A control system as claimed in claim 1 or 2, charaterized in that the said processor comprises a program and information data and is arranged to receive information from the environment.

4. A control system as claimed in claim 3, characterized in that the said processor is loaded with a multimedial program allowing the user to obtain from it both navigation and environment information.

5. A control system as claimed in any preceding claim 2 to 4, characterized in that at least one optoelectonic position code generator or beacon is arrrenged to mark with accuracy a well delimited area outside or inside a building.

6. A control stystem as claimed in claim 6, characterized in that each beacon comprises at least one solid-state emitter arranged to generate optical signals and connected to an electronic circuit generating electric control signals.

7. A control system as claimed in claim 6, characterized in that the said electric control signals are repeated numeric codes.

8. A control system as claimed in claim 7, characterized in that each beacon generates in an asynchronous way and at low duty-cycle packets of data identifying the areas of interest and specific objects in that area.

9. A control system as claimed in any previous claim, characterized in that each beacons comprises an energy source including at least one photovoltaic cell.
